# FASCICULE DE BREVET EUROPEEN

(11) **EP 3 919 339 B1**
(45) Date de publication et mention de la délivrance du brevet: **07.09.2022**
(21) Numéro de dépôt: 21177137.3
(22) Date de dépôt: 01.06.2021
(51) Int. Cl.: B61D 27/00, B60H 1/00

(54) **SYSTÈME DE CLIMATISATION POUR UN HABITACLE DE VÉHICULE, VÉHICULE ET PROCÉDÉ D'UTILISATION CORRESPONDANTS**
KLIMATISIERUNGSSYSTEM FÜR EINEN INNENRAUM EINES FAHRZEUGS, ENTSPRECHENDES FAHRZEUG UND ANWENDUNGSVERFAHREN
AIR CONDITIONING SYSTEM FOR A VEHICLE PASSENGER COMPARTMENT, CORRESPONDING VEHICLE AND METHOD FOR USE THEREOF

(30) Priorité: 03.06.2020 FR 2005813
(43) Date de publication de la demande: 08.12.2021
(73) Titulaire: ALSTOM Transport Technologies, 93400 Saint-Ouen (FR)
(72) Inventeur: RENIE, Matthieu, 17139 DOMPIERRE SUR MER (FR)
(74) Mandataire: Lavoix

(56) Documents cités:
- EP-A1- 1 946 948
- EP-A1- 3 331 714
- WO-A1-2015/055922
- DE-A1-102007 012 421
- DE-A1-102014 226 530

## Description

La présente invention concerne un système de climatisation pour un habitacle de véhicule.

Des systèmes de climatisation sont utilisés pour les habitacles de véhicule, afin d'assurer le confort des utilisateurs du véhicule se trouvant dans l'habitacle ou le bon fonctionnement d'appareils se trouvant dans l'habitacle. De tels systèmes comprennent en général un dispositif de climatisation et un dispositif de commande du dispositif de climatisation.

Les dispositifs de climatisation de tels systèmes sont adaptés pour régler une température intérieure de l'habitacle en chauffant ou en refroidissant un air provenant de l'intérieur et/ou de l'extérieur de l'habitacle. Le chauffage ou le refroidissement de l'habitacle pour atteindre une température désirée de l'habitacle, température étant appropriée pour le confort des utilisateurs et/ou le bon fonctionnement appareils de l'habitacle, peut s'avérer long lors du démarrage du véhicule et lorsque la température extérieure est éloignée de la température désirée de l'habitacle.

A cet effet, il est connu , comme par exemple de WO 2015/055922 A1, de laisser les systèmes de climatisation de véhicules actifs même lorsque les véhicules sont inutilisés. Ceci réduit significativement la durée de démarrage du véhicule puisque l'air de l'habitacle est constamment maintenu à la température désirée de l'habitacle ou proche de celle-ci. Ainsi, lors de la mise en service du véhicule, il n'est pas nécessaire d'attendre le chauffage ou le refroidissement de l'habitacle pour permettre l'accès à un habitacle dont la température est confortable pour les utilisateurs et est adaptée pour le bon fonctionnement d'appareils.

Toutefois, cette solution ne donne pas entière satisfaction puisqu'elle consomme beaucoup d'énergie, le système de climatisation étant en fonctionnement normal et climatisant l'habitacle pour atteindre une température désirée de l'habitacle même lorsque le véhicule est inutilisé.

Un but de la présente invention est de proposer un système de climatisation permettant une mise en service rapide du véhicule tout en minimisant la consommation énergétique du dispositif de climatisation.

A cet effet, l'invention a pour objet un système de climatisation tel que défini dans la revendication 1.

Un tel système de climatisation est particulièrement avantageux puisqu'il permet d'isoler l'intérieur de l'habitacle de l'extérieur de l'habitacle lorsque l'habitacle est dans un état d'attente, ce qui permet de réduire les besoins énergétiques du système de climatisation lorsque l'habitacle est dans un état d'attente tout en maintenant l'habitacle à une température permettant l'atteinte rapide d'une température confortable pour les utilisateurs et adaptée pour le fonctionnement d'appareils divers. Un tel système permet ainsi la mise en service rapide du véhicule tout en minimisant l'énergie consommée par le système de climatisation.

Suivant d'autres aspects avantageux de l'invention, le système de climatisation pour un habitacle de véhicule comporte l'une ou plusieurs des caractéristiques suivantes, prise(s) isolément ou suivant toute combinaison techniquement possible :
- la température consigne d'attente et la température consigne opérationnelle sont égales pour une température extérieure pivot, la température consigne d'attente étant inférieure à la température consigne opérationnelle pour une température extérieure inférieure à la température pivot, la température consigne d'attente étant supérieure à la température consigne opérationnelle pour une température extérieure supérieure à la température pivot ;
- la température consigne d'attente est une température consigne d'attente minimum constante pour une température extérieure inférieure à une température extérieure critique basse et est une température consigne d'attente maximum constante pour un température extérieure supérieure à une température extérieure critique haute, la température consigne d'attente étant une fonction affine de la température extérieure pour une température extérieure comprise entre la température critique basse et la température critique haute ;
- la température consigne d'attente minimum est comprise entre 3°C et 7°C, la température consigne d'attente maximum est comprise entre 33°C et 37°C, la température extérieure critique basse est comprise entre 0°C et 5°C, et la température extérieure critique haute est comprise entre 33°C et 37°C ;
- la température consigne d'attente est égale à la température extérieure pour une température extérieure comprise entre la température extérieure critique haute et la température extérieure critique basse ; et
- le dispositif de commande comprend un module de caractérisation configuré pour caractériser l'état de l'habitacle du véhicule et pour transmettre une information d"état de l'habitacle correspondant à l'état de l'habitacle au module d'acquisition, le module de caractérisation étant configuré pour caractériser l'état de l'habitacle du véhicule :
   - à partir d'une information d'état de l'habitacle saisie par un utilisateur depuis une première interface disposée dans le véhicule, et/ou
   - à partir d'une information d'état de l'habitacle saisie par un utilisateur depuis une deuxième interface disposée à l'extérieur du véhicule, et/ou
   - à partir d'une information d'état de l'habitacle identifié par un capteur disposé dans l'habitacle, le capteur étant de préférence adapté pour identifier la présence d'utilisateurs dans l'habitacle, et/ou
   - à partir d'une information de temps écoulé depuis une utilisation du véhicule.

L'invention concerne par ailleurs un véhicule, de préférence véhicule ferroviaire, et plus particulièrement tramway, comprenant un système de climatisation pour un habitacle de véhicule tel que précité.

L'invention concerne en outre un procédé d'utilisation d'un système de climatisation tel que précité, comprenant les étapes suivantes :
- acquisition d'une information d'état de l'habitacle ;
- commande du dispositif de climatisation en fonction de l'information d'état de l'habitacle acquise,
le dispositif de climatisation étant commandé, lors de l'étape de commande, pour fermer les moyens d'obturation pour que les moyens d'obturation soient dans un état fermé lorsque l'information d'état de l'habitacle acquise correspond à un état d'attente.

Le procédé comprend en outre l'acquisition d'une information correspondant à la température extérieure, de l'extérieur du véhicule, le procédé comprenant l'étape suivante :
- détermination d'une température consigne en fonction de l'information de température extérieure acquise et de l'information d'état de l'habitacle acquise, la température consigne étant une température consigne opérationnelle pour un état de l'habitacle acquis opérationnel et une température consigne d'attente pour un état de l'habitacle acquis d'attente ;
l'étape de commande du dispositif de climatisation étant en outre effectuée en fonction de la température consigne déterminée, l'écart entre la température consigne d'attente et la température extérieure étant inférieur ou égal à l'écart entre la température consigne opérationnelle et la température extérieure, dans une plage de températures de fonctionnement du système de climatisation.

L'invention sera mieux comprise à la lecture de la description qui va suivre, donnée uniquement à titre d'exemple non limitatif et faite en se référant aux dessins sur lesquels :
[Fig 1] la figure 1 est une représentation schématique d'un véhicule ferroviaire comprenant un système de climatisation selon l'invention ;
[Fig 2] la figure 2 est une représentation schématique du système de climatisation représenté sur la figure 1 ;
[Fig 3] la figure 3 est un graphique représentant l'évolution de températures consigne d'attente et opérationnelle en fonction d'une température extérieure ; et

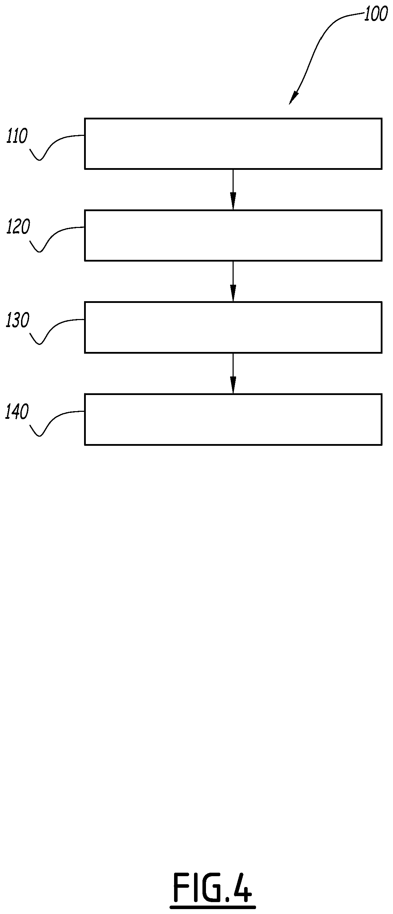

[Fig 4] la figure 4 est un organigramme illustrant les différentes étapes d'un procédé d'utilisation du système de climatisation représenté sur les figures 1 et 2.

Dans la suite de la description, on entend par « température relativement proche » d'une température donnée une température comprise dans une plage s'étendant entre - 5°C et +5°C autour de la température donnée.

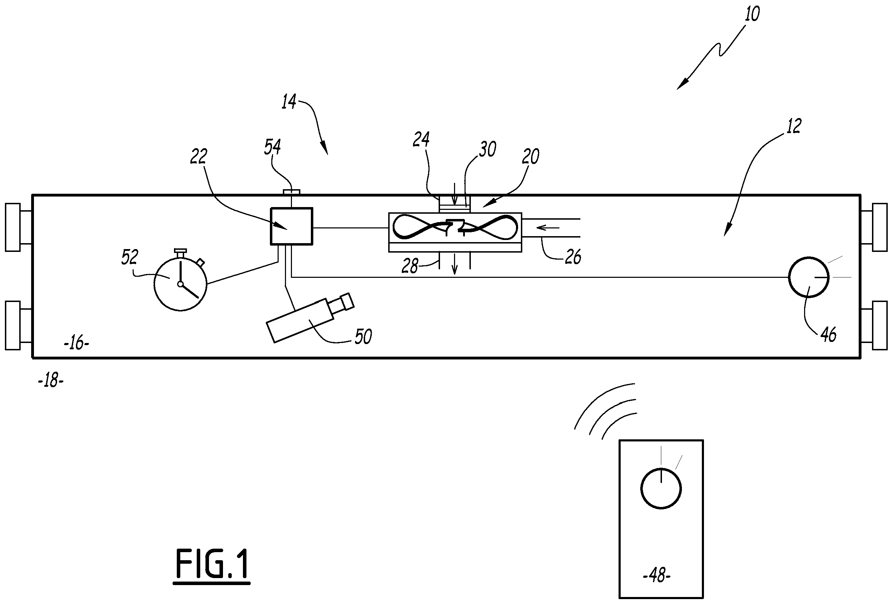

En référence à la figure 1, un véhicule 10 comprend un habitacle 12 et un système de climatisation 14 pour l'habitacle 12.

Le véhicule 10 est par exemple un véhicule ferroviaire, et de préférence un tramway, un métro ou une automotrice régionale ou à grande vitesse de transport de passagers. En variante, le véhicule 10 est un véhicule automobile de transports en commun tel un bus.

L'habitacle 12 définit un intérieur 16 et un extérieur 18 de véhicule. L'habitacle 12 comprend par exemple des parois et des portes de communication entre l'intérieur 16 et l'extérieur 18, disposées autour de l'intérieur 16 et définissant l'intérieur 16.

L'habitacle 12 est adapté pour recevoir des utilisateurs tels des passagers et/ou pour recevoir des appareils, par exemple électroniques.

L'habitacle 12 est caractérisé par un état de l'habitacle. L'état de l'habitacle 12 est en particulier soit un état opérationnel, soit un état d'attente. L'habitacle 12 est dans un état d'attente lorsque le véhicule 10 est en attente, par exemple garé, et que l'habitacle 12 n'est pas destiné à accueillir de passagers et ne comprend effectivement pas de passagers ou par exemple des appareils de l'habitacle en fonctionnement. L'habitacle 12 est dans un état opérationnel, lorsque le véhicule est prêt à circuler ou circule, et en particulier lorsque l'habitacle est destiné à accueillir des passagers ou comprend effectivement des passagers ou est par exemple destiné à accueillir des appareils de l'habitacle en état de fonctionnement.

Le système de climatisation 14 comprend un dispositif de climatisation 20 et un dispositif de commande 22 du dispositif de climatisation 20.

Le système de climatisation 14 est configuré pour fonctionner sur une plage de fonctionnement de températures extérieures, correspondant à la température de l'air à l'extérieur 18 du véhicule. La plage de fonctionnement du système de climatisation 14 est par exemple définie par des températures extérieures comprises entre -20°C et 50°C.

Le dispositif de climatisation 20 est par exemple disposé dans l'habitacle. En variante, le dispositif de climatisation 20 est disposé entre l'intérieur 16 et l'extérieur 18 du véhicule, par exemple dans une des cloisons définissant l'intérieur 16 du véhicule.

Le dispositif de climatisation 20 est adapté pour régler une température intérieure Ti, de l'intérieur du véhicule 10, sur une température consigne Tc en chauffant ou en refroidissant un air intérieur, présent à l'intérieur 16, et/ou un air extérieur, présent à l'extérieur 18 et prélevé par le dispositif de climatisation 20 vers l'intérieur (voir ci-dessous). Par température intérieure Ti on entend la température moyenne de l'air se trouvant à l'intérieur 16. Par température consigne Tc, on entend la température intérieure Ti objectif du système de climatisation 14.

Le dispositif de climatisation 20 comprend une admission d'air extérieur 24 et de préférence une admission d'air intérieur 26. Le dispositif de climatisation 20 comprend une évacuation d'air intérieur 28. Le dispositif de climatisation comprend des moyens d'obturation 30 de l'admission d'air extérieur 24.

Le dispositif de climatisation 20 est en communication fluidique avec l'extérieur 18 par l'admission d'air extérieur 24 et est adapté pour prélever de l'air extérieur par l'admission d'air extérieur 24 avant de chauffer ou de refroidir l'air extérieur prélevé.

Le dispositif de climatisation 20 est en communication fluidique avec l'intérieur 16 par l'admission d'air intérieur 26 et est adapté pour prélever de l'air intérieur par l'admission d'air intérieur 26 avant de chauffer ou de refroidir l'air intérieur prélevé.

Le dispositif de climatisation 20 est en communication fluidique avec l'intérieur 16 par l'évacuation d'air intérieur 28 et est adapté pour rejeter l'air chauffé ou refroidi par le dispositif de climatisation 20 dans l'intérieur 16 pour régler la température intérieure Ti.

Les moyens d'obturation 30 sont de préférence disposés dans l'admission d'air extérieur 24.

Les moyens d'obturation 30 sont mobiles entre une position d'obturation, dans laquelle ils empêchent la circulation d'air entre l'extérieur 18 du véhicule 10 et l'intérieur 16 du véhicule 10 et une position de circulation, dans laquelle ils autorisent la circulation d'air entre l'extérieur 18 du véhicule 10 et l'intérieur 16 du véhicule 10.

En particulier, les moyens d'obturation 30 empêchent la circulation d'air de l'extérieur 18 du véhicule 10 vers l'intérieur 16 du véhicule 10 lorsqu'il sont dans la position d'obturation et autorisent la circulation d'air de l'extérieur 18 du véhicule 10 vers l'intérieur 16 du véhicule 10 lorsqu'ils sont dans la position de circulation.

Les moyens d'obturation forment par exemple un ensemble d'au moins un volet s'étendant dans l'admission d'air extérieur 24 et étant configurés pour obturer l'admission d'air extérieur 24 lorsque les moyens d'obturation sont dans leur position d'obturation et laisser circuler l'air dans l'admission d'air extérieur 24 lorsque les moyens d'obturation sont dans leur position de circulation. De tels volets sont par exemple mobiles en rotation ou en translation entre leurs positions d'obturation et leur position de circulation.

Le dispositif de commande 22 comprend de préférence un module de caractérisation 32 de l'état de l'habitacle du véhicule.

Le dispositif de commande 22 comprend un module d'acquisition 34 d'une information d'état de l'habitacle. Le module d'acquisition 34 est aussi un module d'acquisition d'une information correspondant à une température extérieure Te. Un tel module d'acquisition 34 d'une information d'état de l'habitacle et d'une information correspondant à la température extérieure Te est simplement nommé module d'acquisition 34 dans la suite de la description.

Le dispositif de commande 22 comprend un module de détermination 36 d'une température consigne Tc.

Le dispositif de commande 22 comprend un module de commande 38 du dispositif de climatisation 20.

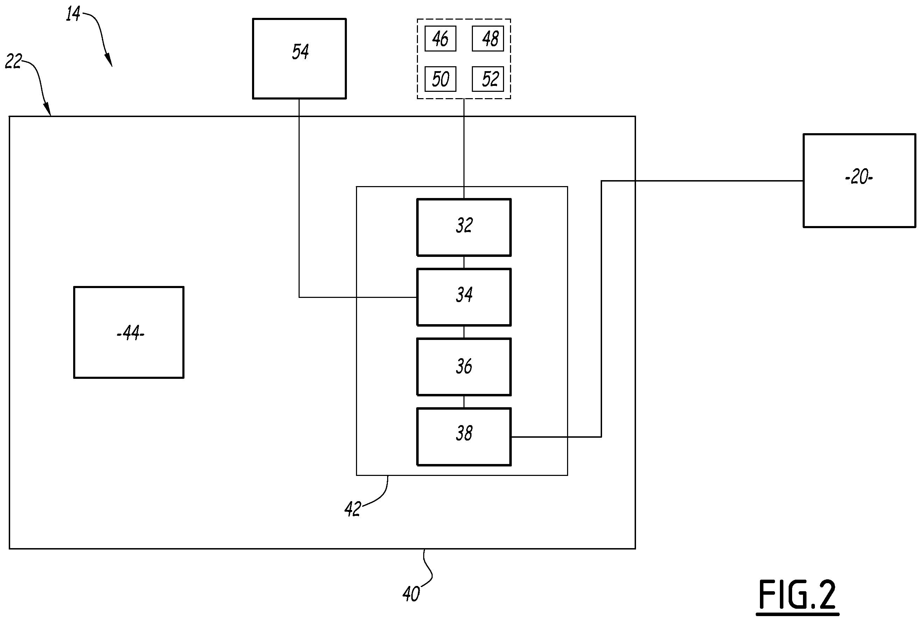

Comme représenté sur la figure 2, le dispositif de commande 22 est un dispositif électronique programmable, par exemple un ordinateur, et comprend par exemple une unité de traitement d'informations 40 formée par exemple d'une mémoire 42 associée à un processeur 44.

Dans un mode de réalisation, le module de caractérisation 32, le module d'acquisition 34, le module de détermination 36 et le module de commande 38 sont réalisés chacun sous forme d'un logiciel exécutable par le processeur 44. La mémoire 42 est alors apte à stocker un logiciel de caractérisation de l'état de l'habitacle 12, un logiciel d'acquisition d'une information d'état de l'habitacle 12 et d'une information correspondant à la température extérieure Te 14, un logiciel de détermination d'une température consigne et un logiciel de commande du dispositif de climatisation 20. Le processeur 44 de l'unité de traitement d'informations 40 est alors apte à exécuter le logiciel de caractérisation, le logiciel d'acquisition, le logiciel de détermination et le logiciel de commande.

En variante, le module de caractérisation 32, le module d'acquisition 34, le module de détermination 36 et le module de commande 38 sont réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Application Specific Integrated Circuit), ou d'une combinaison de ces modes de réalisations.

Lorsque le dispositif de commande 22 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de caractérisation 32 est configuré pour caractériser l'état de l'habitacle 12 du véhicule 10 et pour transmettre l'une information représentant l'état de l'habitacle au module d'acquisition 34.

Le module de caractérisation 32 est par exemple configuré pour caractériser l'état de l'habitacle à partir d'une information d'état de l'habitacle saisie par un utilisateur depuis une première interface 46 disposée dans le véhicule. Une telle première interface 46 est par exemple disposé dans un poste de contrôle du véhicule. Une telle première interface 46 est par exemple connectée au système de climatisation 14 pour transmettre l'information d'état de l'habitacle au module de caractérisation 32. Une telle première interface 46 est par exemple configurée pour permettre à l'utilisateur de choisir entre un état d'attente ou un état opérationnel de l'habitacle, l'état caractérisé de l'habitacle correspondant à l'état choisi par l'utilisateur sur la première interface 46.

En alternative ou en complément, le module de caractérisation 32 est configuré pour caractériser l'état de l'habitacle à partir d'une information d'état de l'habitacle saisie par un utilisateur depuis une deuxième interface 48 disposée à l'extérieur du véhicule 10. Un telle deuxième interface 48 est par exemple disposée dans un dispositif de télécommande. Une telle deuxième interface 48 est par exemple connectée au système de climatisation 14 par ondes radioélectrique pour transmettre l'information d'état de l'habitacle au module de caractérisation 32. Une telle deuxième interface 48 est par exemple configurée pour permettre à l'utilisateur de choisir entre un état d'attente ou un état opérationnel de l'habitacle, l'état caractérisé de l'habitacle correspondant à l'état choisi par l'utilisateur sur la deuxième interface 48.

En alternative ou en complément, le module de caractérisation 32 est configuré pour caractériser l'état de l'habitacle à partir d'une information d'état de l'habitacle identifiée par un capteur 50 disposé dans l'habitacle, le capteur étant de préférence adapté pour identifier la présence d'utilisateurs dans l'habitacle. Un tel capteur 50 comprend par exemple une caméra ou un détecteur à infrarouge et est configuré pour détecter la présence d'utilisateurs dans l'habitacle 12. Un tel capteur 50 est par exemple connecté au système de climatisation 14 pour transmettre l'information d'état de l'habitacle au module de caractérisation 32. Un tel capteur 50 est par exemple configuré pour générer une information d'habitacle correspondant à un état de l'habitacle opérationnel lorsque le capteur 50 détecte un utilisateur dans l'habitacle 12 et pour générer une information d'habitacle correspondant à un état de l'habitacle d'attente lorsque le capteur 50 ne détecte pas d'utilisateur dans l'habitacle 12.

En alternative ou en complément, le module de caractérisation 32 est configuré pour caractériser l'état de l'habitacle à partir d'une information de temps écoulé depuis une utilisation du véhicule 10. L'information de temps écoulé est par exemple mesurée par un chronomètre 52 mesurant la durée depuis l'instant temporel de dernière utilisation du véhicule. Par instant temporel de dernière utilisation du véhicule, on entend par exemple le dernier instant temporel de déplacement du véhicule 10, l'instant du dernier arrêt du moteur de traction du véhicule 10, ou le dernier instant de détection d'un utilisateur dans l'habitacle 12 du véhicule. Le module de caractérisation est par exemple configuré pour caractériser l'état du véhicule 10 comme un état en attente lorsque le temps écoulé depuis une utilisation du véhicule 10 est supérieure à dix minutes, et par exemple égal à dix minutes, quinze minutes ou vingt minutes.

Le module d'acquisition 34 est par exemple connecté au module de caractérisation 32 et est configuré pour transmettre l'information d'état de l'habitacle et une information correspondant à la température extérieure Te, au module de détermination 36. Le module d'acquisition 34 est par exemple connecté à un thermomètre 54, disposé à l'extérieur du véhicule, mesurant la température extérieure Te et transmettant une information correspondant à la température extérieure Te au module d'acquisition 34.

En variante, le module d'acquisition 34 transmet directement une information correspondant à l'état de l'habitacle au module de commande.

Le module de détermination 36 est configuré pour déterminer la température consigne Tc en fonction d'une information correspondant à l'état de l'habitacle acquis et d'une information correspondant à la température extérieure Te acquise . La température consigne Tc est en particulier une température consigne opérationnelle Tço pour un état de l'habitacle acquis opérationnel et une température consigne d'attente Tca pour un état de l'habitacle acquis d'attente. La température consigne opérationnelle Tco et la température consigne d'attente Tca dépendent chacune de la température extérieure Te.

L'écart entre la température consigne d'attente Tca et la température extérieure Te est inférieur ou égal à l'écart entre la température consigne opérationnelle Tco et la température extérieure Te, dans la plage de températures extérieures de fonctionnement du système de climatisation 14. En d'autres termes, pour une température extérieure Te donnée, la température consigne d'attente Tca est plus proche de la température extérieure Te que la température consigne opérationnelle Tco.

La température consigne d'attente Tca et la température consigne opérationnelle Tco sont par exemple égales pour une température extérieure pivot Tp.

La température consigne d'attente Tca est inférieure à la température consigne opérationnelle Tço pour une température extérieure Te inférieure à la température pivot Tp.

La température consigne d'attente Tca est supérieure à la température consigne opérationnelle Tco pour une température extérieure Te supérieure à la température pivot Tp.

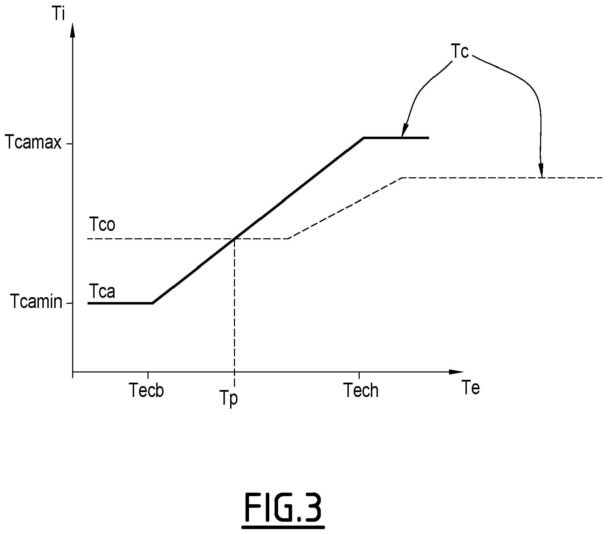

Comme visible sur la figure 3, la température consigne d'attente Tca tracée en traits pleins, évolue par exemple par rapport à la température extérieure Te selon une courbe ayant un profil sensiblement en forme de sigmoïde et par exemple selon une courbe comportant deux tronçons de température consigne constants connectés par une fonction affine de la température extérieure Te. La température consigne d'attente Tca est par exemple une température consigne d'attente minimum Tcamin constante pour une température extérieure Te inférieure à une température extérieure critique basse Tecb. La température consigne d'attente Tca est par exemple une température consigne d'attente maximum Tcamax constante pour une température extérieure Te supérieure à une température critique haute Tech. La température consigne d'attente Tca est par exemple une fonction affine de la température extérieure Te pour une température extérieure comprise entre la température critique basse Tecb et la température critique haute Tech.

La température consigne d'attente Tca est de préférence une fonction continue de la température extérieure Te sur la plage de fonctionnement du système de climatisation 14.

La température consigne d'attente Tca est par exemple relativement proche de la température extérieure Te pour une température extérieure Te comprise entre la température extérieure critique haute Tech et la température extérieure critique basse Tecb. La température consigne d'attente Tca est alors comprise dans une plage s'étendant entre -5°C et +5°C autour de la température extérieure Te pour une température extérieure Te comprise entre la température extérieure critique haute Tech et la température extérieure critique basse Tecb.

Dans un mode de réalisation particulier, la température consigne d'attente Tca est sensiblement égale à la température extérieure Te pour une température extérieure Te comprise entre la température extérieure critique haute Tech et la température extérieure critique basse Tecb.

Dans un autre mode de réalisation particulier, la température pivot Tp est égale à la température critique haute Tech. La température consigne d'attente Tca est alors supérieure à la température extérieure Te pour toute température extérieure Te inférieure à la température critique haute Tech. Selon cette variante, la température consigne d'attente Tca est par exemple supérieure d'au maximum 5°C à la température extérieure Te. Selon cette variante, le dispositif de climatisation 20 est de préférence configuré pour ne pas chauffer l'air intérieur prélevé pour une température supérieure à 20°C, la température consigne d'attente Tca étant par exemple atteinte par effet de serre dans l'habitacle 12.

La température consigne d'attente minimum Tcamin est par exemple comprise entre 3°C et 7°C.

La température consigne d'attente maximum Tcamax est par exemple comprise entre 33°C et 37°.

La température extérieure critique basse Tecb est par exemple comprise entre 0°C et 5°C .

La température extérieure critique haute Tech est par exemple comprise entre 33°C et 37°C.

Comme visible sur la figure 3, la température consigne opérationnelle Tço tracée en traits pointillés, évolue par exemple également par rapport à la température extérieure Te selon une courbe ayant un profil sensiblement en forme de sigmoïde et par exemple selon une courbe comportant deux tronçons de température consigne constants connectés par une fonction affine de la température extérieure Te.

Le module de commande 38 est configuré pour commander le dispositif de climatisation 20 en fonction de l'information d'état de l'habitacle et de préférence, en outre en fonction de la température consigne Tc déterminée.

Le module de commande 38 est configuré pour commander la fermeture des moyens d'obturation 30 pour que les moyens d'obturation 30 soient dans un état fermé lorsque l'information d'état de l'habitacle acquis est l'état d'attente.

Le module de commande 38 est configuré pour commander le dispositif de climatisation 20 pour régler la température intérieure Ti du véhicule sur une température consigne opérationnelle Tco, ladite température consigne opérationnelle Tco dépendant de la température extérieure Te, lorsque l'état de l'habitacle acquis est un état opérationnel. Le dispositif de climatisation 20 est alors adapté pour chauffer ou refroidir de l'air intérieur et/ou de l'air extérieur et pour injecter cet air réchauffé ou refroidi à l'intérieur 16 de l'habitacle 12, pour que la température intérieure Ti de l'habitacle soit sensiblement égale à la température consigne opérationnelle Tço associée à l'information correspondant à la température extérieure Te acquise.

Le module de commande 38 est configuré pour commander le dispositif de climatisation 20 pour régler la température intérieure Ti du véhicule sur une température consigne d'attente Tca, ladite température consigne d'attente Tca dépendant de la température extérieure Te, et en particulier, de l'information correspondant à la température extérieure Te acquise, lorsque l'information d'état de l'habitacle acquise correspond à un état d'attente. Le dispositif de climatisation 20 est alors adapté pour chauffer ou refroidir uniquement de l'air intérieur et pour injecter cet air réchauffé ou refroidi à l'intérieur 16 de l'habitacle 12, pour que la température intérieure Ti de l'habitacle soit sensiblement égale à la température consigne d'attente Tca associée à la température extérieure Te acquise.

Le système de climatisation 14 est de préférence configuré pour que la température intérieure Ti, de l'intérieur 16 du véhicule 10, soit égale à la température consigne opérationnelle Tco en un temps raisonnable comme par exemple en moins de 20 minutes après la première acquisition d'une information d'état de l'habitacle correspondant à un état de l'habitacle opérationnel suivant une acquisition d'une information d'état de l'habitacle correspondant à un état de l'habitacle d'attente.

Un procédé d'utilisation 100 d'un système de climatisation 14 tel que précédemment décrit va maintenant être présenté.

Le procédé d'utilisation 100 comprend de préférence une étape 110 de caractérisation de l'état de l'habitacle.

Lors de cette étape de caractérisation 110 de l'habitacle, le module de caractérisation 32 caractérise par exemple l'état de l'habitacle 12 du véhicule 10 à partir d'une information d'état de l'habitacle saisie par un utilisateur depuis une première interface 46 disposée dans le véhicule, et/ou à partir d'une information d'état de l'habitacle saisie par un utilisateur depuis une deuxième interface 48 disposée à l'extérieur du véhicule, et/ou à partir d'une information d'état de l'habitacle identifié par un capteur 50 disposé dans l'habitacle, le capteur étant de préférence adapté pour identifier la présence d'utilisateurs dans l'habitacle 12, et/ou à partir d'une information de temps écoulé depuis une utilisation du véhicule.

A la suite de cette étape de caractérisation 110, le procédé comprend une étape 120 d'acquisition d'une information d'état de l'habitacle et de préférence d'acquisition, en outre, d'une information correspondant à la température extérieure Te.

Lors de l'étape d'acquisition 120, le module d'acquisition 34 acquiert l'information d'état de l'habitacle et l'information correspondant à la température extérieure Te pour transmettre l'information d'état de l'habitacle et, de préférence, l'information correspondant à la température extérieure Te au module de détermination ou pour transmettre directement l'information d'état de l'habitacle au module de commande 38.

A la suite de l'étape d'acquisition 120, le procédé 100 comprend une étape de détermination 130 d'une température consigne Tc en fonction de l'information correspondant à la température extérieure Te acquise et de l'information d'état de l'habitacle acquis.

Lors de l'étape de détermination 130, la température consigne déterminée est une température consigne opérationnelle Tco lorsque l'information d'état de l'habitacle acquis correspond à un état de l'habitacle opérationnel et est une température consigne d'attente Tca lorsque l'information d'état de l'habitacle acquis correspond à un état de l'habitacle d'attente.

À la suite de l'étape de détermination 130, le procédé 100 comprend une étape de commande 140 du dispositif de climatisation.

Lors de l'étape de commande 140, le module de commande 38 commande le dispositif de climatisation 20 en fonction de l'information d'état de l'habitacle et en fonction de l'information correspondant à la température extérieure Te. Le dispositif de climatisation 20 est alors commandé pour fermer les moyens d'obturation pour que les moyens d'obturation soient dans un état fermé lorsque l'état de l'habitacle acquis est l'état d'attente. Lors de l'étape de commande 140, le module de commande est en outre configuré pour commander le dispositif de climatisation 20 en fonction de la température consigne déterminée, l'écart entre la température consigne d'attente Tca et la température extérieure Te étant inférieur ou égal à l'écart entre la température consigne opérationnelle Tco et la température extérieure Te, dans une plage de températures extérieures de fonctionnement du système de climatisation.

Un système de climatisation 14 dans lequel des moyens d'obturation 30 de l'admission d'air extérieur 24 sont fermés lorsque l'information d'état de l'habitacle 12 correspond à un état d'attente est particulièrement avantageux pour réduire ou limiter les besoins énergétiques du système de climatisation 14, l'air contenu dans l'habitacle 12 circulant alors en circuit fermé et le dispositif de climatisation 20 n'ayant ainsi pas à climatiser un air extérieur dont la température Te est éloignée de la température consigne Tc.

L'utilisation d'une température consigne opérationnelle Tco et d'une température consigne d'attente Tca en fonction de l'état d'attente ou opérationnel du véhicule est particulièrement avantageuse puisqu'elle limite les besoins de climatisation tout en climatisant suffisamment l'habitacle 12 pour que le véhicule soit opérationnel rapidement.

La présence d'une température consigne d'attente minimum Tcamin constante et d'une température consigne d'attente maximum Tcamax constante est particulièrement avantageuse pour empêcher l'atteinte de températures extrêmes dans l'habitacle 12, ce qui améliore ainsi le confort des utilisateurs lors de la mise en service du véhicule 10.

Une température consigne d'attente Tca égale à la température extérieure pour une température extérieure Te comprise entre la température extérieure critique haute Tech et la température extérieure critique basse Tecb est particulièrement avantageuse puisque le système de climatisation ne demande alors pas d'apport d'énergie pour climatiser l'air lorsque la température extérieure Te est comprise entre la température extérieure critique haute Tech et la température extérieure critique basse Tecb.

L'utilisation d'un module de caractérisation 32 configuré pour caractériser l'état de l'habitacle 12 à partir d'interfaces 46, 48, de capteurs 50 ou de durées est particulièrement avantageuse pour faciliter la mise en service du véhicule 10.

## Revendications

1. Système de climatisation (14) pour un habitacle (12) de véhicule (10), l'habitacle (12) de véhicule définissant un intérieur (16) de véhicule et un extérieur (18) de véhicule, le système de climatisation (14) comprenant :
- un dispositif de climatisation (20) adapté pour régler une température intérieure (Ti), de l'intérieur (16) de véhicule, sur une température consigne (Tc) en chauffant ou en refroidissant un air intérieur et/ou un air extérieur, le dispositif de climatisation (20) comprenant au moins une admission d'air extérieur (24) et des moyens d'obturation (30) de l'admission d'air extérieur (24), les moyens d'obturation (30) étant mobiles entre une position d'obturation, dans laquelle ces moyens d'obturation (30) empêchent la circulation d'air entre l'extérieur (18) et l'intérieur (16) du véhicule, et une position de circulation dans laquelle ces moyens d'obturation (30) permettent la circulation d'air ;
- un dispositif de commande (22) du dispositif de climatisation (20), comprenant :
- un module d'acquisition (34) configuré pour acquérir une information d'état de l'habitacle (12), l'état de l'habitacle (12) étant soit un état opérationnel, soit un état d'attente,
- un module de commande (38) configuré pour commander le dispositif de climatisation (20) en fonction de l'information d'état de l'habitacle ;
le module de commande (38) étant configuré pour commander la fermeture des moyens d'obturation (30) pour que les moyens d'obturation (30) soient dans la position d'obturation lorsque l'information d'état de l'habitacle (12) acquis correspond à l'état d'attente, **caractérisé en ce que**
le module d'acquisition (34) est en outre configuré pour acquérir une information correspondant à une température extérieure (Te), de l'extérieur (18) du véhicule, le dispositif de commande (22) comprenant en outre un module de détermination (36), configuré pour déterminer la température consigne (Tc) en fonction de l'information correspondant à la température extérieure (Te) acquise et de l'information d'état de l'habitacle acquise, la température consigne (Tc) étant une température consigne opérationnelle (Tco) pour une information d'état de l'habitacle acquise correspondant à un état de l'habitacle opérationnel et une température consigne d'attente (Tca) pour une information d'état de l'habitacle acquise correspondant à un état de l'habitacle d'attente, le module de commande (38) étant en outre configuré pour commander le dispositif de climatisation (20) en fonction de la température consigne (Tc) déterminée, l'écart entre la température consigne d'attente (Tca) et la température extérieure (Te) étant inférieur ou égal à l'écart entre la température consigne opérationnelle (Tco) et la température extérieure (Te), dans une plage de températures de fonctionnement du système de climatisation.

2. Système de climatisation (14) selon la revendication 1, dans lequel la température consigne d'attente (Tca) et la température consigne opérationnelle (Tco) sont égales pour une température extérieure pivot (Tp), la température consigne d'attente (Tca) étant inférieure à la température consigne opérationnelle (Tco) pour une température extérieure (Te) inférieure à la température pivot (Tp), la température consigne d'attente (Tca) étant supérieure à la température consigne opérationnelle (Tco) pour une température extérieure (Te) supérieure à la température pivot (Tp).

3. Système de climatisation (14) selon la revendication 1 ou 2, dans lequel la température consigne d'attente (Tca) est une température consigne d'attente minimum (Tcamin) constante pour une température extérieure (Te) inférieure à une température extérieure critique basse (tecb) et est une température consigne d'attente maximum (Tcamax) constante pour un température extérieure (Te) supérieure à une température extérieure critique haute (Tech), la température consigne d'attente (Tca) étant une fonction affine de la température extérieure (Te) pour une température extérieure (Te) comprise entre la température critique basse (Tecb) et la température critique haute (Tech).

4. Système de climatisation (14) selon la revendication 3, dans lequel :
- la température consigne d'attente minimum (Tcamin) est comprise entre 3°C et 7°C,
- la température consigne d'attente maximum (Tcamax) est comprise entre 33°C et 37°C,
- la température extérieure critique basse (Tecb) est comprise entre 0°C et 5°C, et
- la température extérieure critique haute (Tech) est comprise entre 33°C et 37°C.

5. Système de climatisation (14) selon la revendication 3 ou 4, dans lequel la température consigne d'attente (Tca) est comprise dans une plage s'étendant entre -5°C et +5°C autour de la température extérieure (Te) pour une température extérieure (Te) comprise entre la température extérieure critique haute (Tech) et la température extérieure critique basse (Tecb).

6. Système de climatisation (14) selon l'une quelconque des revendications précédentes, dans lequel le dispositif de commande (22) comprend un module de caractérisation (32) configuré pour caractériser l'état de l'habitacle du véhicule et pour transmettre une information d'état de l'habitacle correspondant à l'état de l'habitacle au module d'acquisition (34), le module de caractérisation (32) étant configuré pour caractériser l'état de l'habitacle du véhicule :
- à partir d'une information d'état de l'habitacle saisie par un utilisateur depuis une première interface (46) disposée dans le véhicule, et/ou
- à partir d'une information d'état de l'habitacle saisie par un utilisateur depuis une deuxième (48) interface disposée à l'extérieur (18) du véhicule, et/ou
- à partir d'une information d'état de l'habitacle identifié par un capteur (50) disposé dans l'habitacle (12), le capteur étant de préférence adapté pour identifier la présence d'utilisateurs dans l'habitacle, et/ou
- à partir d'une information de temps écoulé depuis une utilisation du véhicule.

7. Véhicule (10), de préférence véhicule ferroviaire, et plus particulièrement tramway, comprenant un système de climatisation (14) pour un habitacle (12) de véhicule (10) selon l'une quelconque des revendications 1 à 6.

8. Procédé (100) d'utilisation d'un système de climatisation (14) selon l'une quelconque des revendications 1 à 6, comprenant les étapes suivantes :
- acquisition (120) d'une information d'état de l'habitacle ;
- commande (140) du dispositif de climatisation (20) en fonction de l'information d'état de l'habitacle acquise,
le dispositif de climatisation (20) étant commandé, lors de l'étape de commande, pour fermer les moyens d'obturation (30) pour que les moyens d'obturation (30) soient dans un état fermé lorsque l'information d'état de l'habitacle acquise correspond à un état d'attente,
dans lequel l'étape d'acquisition (120) comprend en outre l'acquisition d'une information correspondant à la température extérieure (Te), de l'extérieur (18) du véhicule, le procédé (100) comprenant l'étape suivante :
- détermination (130) d'une température consigne (Tc) en fonction de l'information de température extérieure (Te) acquise et de l'information d'état de l'habitacle acquise, la température consigne (Tc) étant une température consigne opérationnelle (Tco) pour un état de l'habitacle acquis opérationnel et une température consigne d'attente (Tca) pour un état de l'habitacle acquis d'attente ;
l'étape de commande (140) du dispositif de climatisation (20) étant en outre effectuée en fonction de la température consigne (Tc) déterminée, l'écart entre la température consigne d'attente (Tca) et la température extérieure (Te) étant inférieur ou égal à l'écart entre la température consigne opérationnelle (Tco) et la température extérieure (Te), dans une plage de températures de fonctionnement du système de climatisation (14).

## Patentansprüche

1. Klimatisierungssystem (14) für eine Fahrgastzelle (12) eines Fahrzeugs (10), wobei die Fahrgastzelle (12) eine Innenseite (16) des Fahrzeugs und eine Außenseite (18) des Fahrzeugs definiert, das Klimatisierungssystem (14) umfassend:
- eine Klimatisierungsvorrichtung (20), die angepasst ist, um eine Innentemperatur (Ti) der Innenseite (16) des Fahrzeugs auf eine Solltemperatur (Tc) einzustellen, indem sie eine Innenluft und/oder eine Außenluft erwärmt oder kühlt, wobei die Klimatisierungsvorrichtung (20) umfassend mindestens einen Außenlufteinlass (24) und ein Verschlusseinrichtungen (30) für den Außenlufteinlass (24), wobei die Verschlusseinrichtungen (30) zwischen einer Verschlussposition, in der diese Verschlusseinrichtungen (30) die Luftzirkulation zwischen der Außenseite (18) und der Innenseite (16) des Fahrzeugs verhindern, und einer Zirkulationsposition, in der diese Verschlusseinrichtungen (30) die Luftzirkulation ermöglichen, beweglich sind;
- eine Steuervorrichtung (22) der Klimatisierungsvorrichtung (20), umfassend:
- ein Erfassungsmodul (34), das konfiguriert ist, um Zustandsinformationen der Fahrgastzelle (12) zu erfassen, wobei der Zustand der Fahrgastzelle (12) entweder ein Betriebszustand oder ein Wartezustand ist,
- ein Steuermodul (38), das konfiguriert ist, um die Klimatisierungsvorrichtung (20) abhängig von den Zustandsinformationen der Fahrgastzelle zu steuern;
wobei das Steuermodul (38) konfiguriert ist, um das Schließen der Verschlusseinrichtungen (30) zu steuern, damit die Verschlusseinrichtungen (30) in der Verschlussposition sind, wenn die erfassten Zustandsinformationen der Fahrgastzelle (12) dem Wartezustand entsprechen, **dadurch gekennzeichnet, dass**
das Erfassungsmodul (34) ferner konfiguriert ist, um Informationen entsprechend einer Außentemperatur (Te) von der Außenseite (18) des Fahrzeugs zu erfassen, die Steuervorrichtung (22) ferner umfassend ein Bestimmungsmodul (36), das konfiguriert ist, um die Solltemperatur (Tc) abhängig von den erfassten Informationen entsprechend der Außentemperatur (Te) und den erfassten Zustandsinformationen der Fahrgastzelle zu bestimmen, wobei die Solltemperatur (Tc) eine Betriebs-Solltemperatur (Tco) für erfasste Zustandsinformationen der Fahrgastzelle entsprechend einem Betriebszustand der Fahrgastzelle und eine Warte-Solltemperatur (Tca) für erfasste Zustandsinformationen der Fahrgastzelle entsprechend einem Wartezustand der Fahrgastzelle ist, wobei das Steuermodul (38) ferner konfiguriert ist, um die Klimatisierungsvorrichtung (20) abhängig von der bestimmten Solltemperatur (Tc) zu steuern, wobei die Abweichung zwischen der Warte-Solltemperatur (Tca) und der Außentemperatur (Te) kleiner als oder gleich wie die Abweichung zwischen der Betriebs-Solltemperatur (Tco) und der Außentemperatur (Te) innerhalb eines Betriebstemperaturbereichs des Klimatisierungssystems ist.

2. Klimatisierungssystem (14) nach Anspruch 1, wobei die Warte-Solltemperatur (Tca) und die Betriebs-Solltemperatur (Tco) bei einer Leit-Außentemperatur (Tp) gleich sind, wobei die Warte-Solltemperatur (Tca) bei einer Außentemperatur (Te), die niedriger ist als die Leit-Temperatur (Tp), niedriger ist als die Betriebs-Solltemperatur (Tco), wobei die Warte-Solltemperatur (Tca) bei einer Außentemperatur (Te), die höher ist als die Leit-Temperatur (Tp), höher ist als die Betriebs-Solltemperatur (Tco).

3. Klimatisierungssystem (14) nach Anspruch 1 oder 2, wobei die Warte-Solltemperatur (Tca) eine konstante minimale Warte-Solltemperatur (Tcamin) für eine Außentemperatur (Te) ist, die niedriger ist als eine niedrige kritische Außentemperatur (tecb), und eine konstante maximale Warte-Solltemperatur (Tcamax) für eine Außentemperatur (Te) ist, die höher ist als eine hohe kritische Außentemperatur (Tech), wobei die Warte-Solltemperatur (Tca) eine affine Funktion der Außentemperatur (Te) für eine Außentemperatur (Te) ist, die zwischen der niedrigen kritischen Temperatur (Tecb) und der hohen kritischen Temperatur (Tech) ist.

4. Klimatisierungssystem (14) nach Anspruch 3, wobei:
- die minimale Warte-Solltemperatur (Tcamin) zwischen 3 °C und 7 °C liegt,
- die maximale Warte-Solltemperatur (Tcamax) zwischen 33 °C und 37 °C liegt,
- die niedrige kritische Außentemperatur (Tecb) zwischen 0 °C und 5 °C liegt, und
- die hohe kritische Außentemperatur (Tech) zwischen 33 °C und 37 °C liegt.

5. Klimatisierungssystem (14) nach Anspruch 3 oder 4, wobei die Warte-Solltemperatur (Tca) in einem Bereich liegt, der sich für eine Außentemperatur (Te), die zwischen der hohen kritischen Außentemperatur (Tech) und der niedrigen kritischen Außentemperatur (Tecb) liegt, zwischen -5 °C und +5 °C um die Außentemperatur (Te) erstreckt.

6. Klimatisierungssystem (14) nach einem der vorherigen Ansprüche, wobei die Steuervorrichtung (22) ein Charakterisierungsmodul (32) umfasst, das konfiguriert ist, um den Zustand der Fahrgastzelle zu charakterisieren und um Zustandsinformationen der Fahrgastzelle entsprechend dem Zustand der Fahrgastzelle an das Erfassungsmodul (34) zu übertragen, wobei das Charakterisierungsmodul (32) konfiguriert ist, um den Zustand der Fahrgastzelle zu charakterisieren:
- anhand von Zustandsinformationen der Fahrgastzelle, die von einem Benutzer an einer erste Benutzeroberfläche (46) eingegeben werden, die im Fahrzeug angeordnet ist, und/oder anhand von Zustandsinformationen der Fahrgastzelle, die von einem Benutzer über eine zweite Benutzeroberfläche (48) eingegeben werden, die außerhalb (18) des Fahrzeugs angeordnet ist, und/oder
- anhand von Zustandsinformationen der Fahrgastzelle, die von einem Sensor (50) identifiziert werden, der in der Fahrgastzelle (12) angeordnet ist, wobei der Sensor vorzugsweise angepasst ist, um die Anwesenheit von Benutzern in der Fahrgastzelle zu identifizieren, und/oder anhand von Informationen über die Zeit, die seit einer Benutzung des Fahrzeugs verstrichen ist.

7. Fahrzeug (10), vorzugsweise Schienenfahrzeug und insbesondere Straßenbahn, umfassend ein Klimatisierungssystem (14) für eine Fahrgastzelle (12) eines Fahrzeugs (10) nach einem der Ansprüche 1 bis 6.

8. Verfahren (100) zur Verwendung eines Klimatisierungssystem (14) nach einem der Ansprüche 1 bis 6, umfassend die folgenden Schritte:
- Erfassen (120) von Zustandsinformation der Fahrgastzelle;
- Steuern (140) der Klimatisierungsvorrichtung (20) abhängig von den erfassten Zustandsinformationen der Fahrgastzelle,
wobei die Klimatisierungsvorrichtung (20) in dem Steuerschritt gesteuert wird, um die Verschlusseinrichtungen (30) zu schließen, damit die Verschlusseinrichtungen (30) in einem geschlossenen Zustand sind, wenn die erfassten Zustandsinformationen der Fahrgastzelle einem Wartezustand entsprechen,
wobei der Erfassungsschritt (120) ferner das Erfassen von Informationen umfasst, die der Außentemperatur (Te), der Außenseite (18) des Fahrzeugs entsprechen, das Verfahren (100) umfassend den folgenden Schritt:
- Bestimmen (130) einer Solltemperatur (Tc) abhängig von den erfassten Außentemperaturinformationen (Te) und den erfassten Zustandsinformationen der Fahrgastzelle, wobei die Solltemperatur (Tc) eine Betriebs-Solltemperatur (Tco) für einen erfassten Betriebszustand der Fahrgastzelle und eine Warte-Solltemperatur (Tca) für einen erfassten Wartezustand der Fahrgastzelle ist;
wobei Steuerschritt (140) der Klimatisierungsvorrichtung (20) ferner abhängig von der bestimmten Solltemperatur (Tc) durchgeführt wird, wobei die Abweichung zwischen der Warte-Solltemperatur (Tca) und der Außentemperatur (Te) in einem Bereich von Betriebstemperaturen des Klimatisierungssystems (14) kleiner als oder gleich wie die Abweichung zwischen der Betriebs-Solltemperatur (Tco) und der Außentemperatur (Te) ist.

## Claims

1. An air conditioning system (14) for a vehicle (10) passenger compartment (12), the vehicle passenger compartment (12) defining a vehicle interior (16) and a vehicle exterior (18), the air conditioning system (14) comprising:
- an air conditioning device (20) adapted to adjust an interior temperature (Ti) of the vehicle interior (16) to a setpoint temperature (Tc) by heating or cooling interior air and/or exterior air, the air conditioning device (20) comprising at least one exterior air inlet (24) and shut-off means (30) for the exterior air inlet (24), the shut-off means (30) being movable between a shut position, in which said shut-off means (30) prevents the flow of air between the exterior (18) and the interior (16) of the vehicle, and a flow position, in which said shut-off means (30) allow the flow of air;
- a control device (22) for the air conditioning device (20), comprising:
- an acquisition module (34) configured to acquire status information from the passenger compartment (12), the status from the passenger compartment (12) being either an operational status or a standby status,
- a control module (38) configured to control the air conditioning device (20) based on the status from the passenger compartment;
the control module (38) being configured to control the closing of the shut-off means (30) so that the shut-off means (30) are in the shut position when the acquired passenger compartment status information (12) corresponds to the standby status, **characterised in that**
the acquisition module (34) is further configured to acquire information corresponding to an outside temperature (Te) from the exterior (18) of the vehicle, the control device (22) further comprising a determination module (36) configured to determine the setpoint temperature (Tc) as a function of the information corresponding to the acquired outside temperature (Te) and the acquired passenger compartment status information, the setpoint temperature (Tc) being an operational setpoint temperature (Tco) for acquired passenger compartment status information corresponding to an operational passenger compartment status and a standby setpoint temperature (Tca) for acquired passenger compartment status information corresponding to a standby passenger compartment status, the control module (38) being further configured to control the air conditioner (20) based on the determined setpoint temperature (Tc), wherein the deviation between the standby setpoint temperature (Tca) and the outdoor temperature (Te) is less than or equal to the deviation between the operational setpoint temperature (Tco) and the outdoor temperature (Te), within an operating temperature range of the air conditioning system.

2. The air conditioning system (14) according to claim 1, wherein the standby setpoint temperature (Tca) and the operational setpoint temperature (Tco) are equal for a pivot outdoor temperature (Tp), the standby setpoint temperature (Tca) being lower than the operational setpoint temperature (Tco) for an outdoor temperature (Te) lower than the pivot temperature (Tp), the standby setpoint temperature (Tca) being higher than the operational setpoint temperature (Tco) for an outdoor temperature (Te) higher than the pivot temperature (Tp).

3. The air conditioning system (14) according to claim 1 or 2, in which the standby setpoint temperature (Tca) is a constant minimum standby setpoint temperature (Tcamin) for an outside temperature (Te) below a low critical outside temperature (tecb) and is a constant maximum standby setpoint temperature (Tcamax) for an outside temperature (Te) above a high critical outside temperature (Tech), the standby setpoint temperature (Tca) being a linear function of the outside temperature (Te) for an outside temperature (Te) between the low critical temperature (Tecb) and the high critical temperature (Tech).

4. The air conditioning system (14) according to claim 3, wherein:
- the minimum standby temperature (Tcamin) is between 3°C and 7°C,
- the maximum standby temperature (Tcamax) is between 33°C and 37°C,
- the low critical outdoor temperature (Tecb) is between 0°C and 5°C, and
- the high critical outdoor temperature (Tech) is between 33°C and 37°C.

5. The air conditioning system (14) according to claim 3 or 4, wherein the standby setpoint temperature (Tca) is within a range of -5°C to +5°C around the outdoor temperature (Te) for an outdoor temperature (Te) between the high critical outdoor temperature (Tech) and the low critical outdoor temperature (Tecb).

6. The air conditioning system (14) according to any one of the preceding claims, wherein the controller (22) comprises a characterization module (32) configured to characterise the status of the vehicle passenger compartment and to transmit passenger compartment status information corresponding to the passenger compartment status to the acquisition module (34), the characterization module (32) being configured to characterise the vehicle passenger compartment status:
- based on passenger compartment status information entered by a user from a first interface (46) located in the vehicle, and/or from passenger compartment status information entered by a user from a second interface (48) located outside (18) the vehicle, and/or
- based on information on the passenger compartment status identified by a sensor (50) disposed in the passenger compartment (12), the sensor preferably being adapted to identify the presence of users in the passenger compartment, and/or based on information on the time that has elapsed since the vehicle was used.

7. A vehicle (10), preferably a railway vehicle, and more particularly a tramway, comprising an air conditioning system (14) for a passenger compartment (12) of a vehicle (10) according to any one of claims 1 to 6.

8. A method (100) for using an air conditioning system (14) according to any of claims 1 to 6, comprising the following steps:
- acquiring (120) status information from the passenger compartment;
- controlling (140) the air conditioning device (20) according to the acquired passenger compartment status information,
the air conditioning device (20) being controlled, in the controlling step, to close the shut-off means (30) so that the shut-off means (30) is in a closed status when the acquired passenger compartment status information corresponds to a standby status,
wherein the acquiring step (120) further comprises acquiring information corresponding to the outside temperature (Te) of the exterior (18) of the vehicle, the method (100) comprising the following step:
determining (130) a setpoint temperature (Tc) as a function of the acquired external temperature information (Te) and the acquired passenger compartment status information, the setpoint temperature (Tc) being an operational setpoint temperature (Tco) for an operational acquired passenger compartment status and a standby setpoint temperature (Tea) for a standby acquired passenger compartment status;
the controlling step (140) of the air-conditioning device (20) is further carried out as a function of the determined setpoint temperature (Tc), the deviation between the standby setpoint temperature (Tca) and the outside temperature (Te) being less than or equal to the deviation between the operating setpoint temperature (Tco) and the outside temperature (Te), within an operating temperature range of the air conditioning system (14)
